Europäisches Patentamt

European Patent Office

Office européen des brevets

(19)

(11) EP 0 931 429 B1

(12) **FASCICULE DE BREVET EUROPEEN**

(45) Date de publication et mention
de la délivrance du brevet:
**14.09.2005 Bulletin 2005/37**

(21) Numéro de dépôt: **98937617.3**

(22) Date de dépôt: **10.07.1998**

(51) Int Cl.⁷: **H04Q 7/34**

(86) Numéro de dépôt international:
**PCT/FR1998/001511**

(87) Numéro de publication internationale:
**WO 1999/004588 (28.01.1999 Gazette 1999/04)**

(54) **PROCEDE ET DISPOSITIF D'ANALYSE DES INTERFERENCES DANS UN SYSTEME DE RADIOCOMMUNICATION CELLULAIRE**

VERFAHREN UND VORRICHTUNG ZUR INTERFERENZANALYSE IN EINEM ZELLULAREN MOBILKOMMUNIKATIONSSYSTEM

METHOD AND DEVICE FOR ANALYSING INTERFERENCE IN A CELLULAR RADIOCOMMUNICATION SYSTEM

(84) Etats contractants désignés:
**DE FI FR GB SE**

(30) Priorité: **15.07.1997 FR 9708954**

(43) Date de publication de la demande:
**28.07.1999 Bulletin 1999/30**

(73) Titulaire: **Thales**
**75008 Paris (FR)**

(72) Inventeurs:
• **MONOT, Jean-Jacques**
**Thomson-CSF Prop. Intellect.**
**F-94117 Arcueil Cédex (FR)**
• **PIPON, François**
**Thomson-CSF Propriété Intellect.**
**F-94117 Arcueil Cédex (FR)**
• **LASNIER, Frédérique**
**Thomson-CSF Propriété Intel.**
**F-94117 Arcueil Cédex (FR)**

(56) Documents cités:
• **MATHAUER V: "OPTIMALE FUNKZELLENPLANUNG" NACHRICHTEN ELEKTRONIK UND TELEMATIK, vol. 46, no. 6, 1 juin 1992, page 317/318, 320 XP000471604**

# EP 0 931 429 B1

**Description**

La présente invention concerne un procédé et un dispositif pour l'analyse des interférences dans un système de radiocommunication cellulaire de type GSM ou DCS 1800 par exemple.

Dans un système de radiocommunication cellulaire la couverture d'un territoire déterminé a lieu en utilisant des cellules desservies par des stations de base et en appliquant un motif de réutilisation des fréquences, qui permet d'augmenter la capacité du réseau.

Différents types de cellules sont utilisés. Ceux-ci sont constitués de macrocellules et de microcellules. Une macrocellule met en oeuvre une station de base placée sur un point élevé comme le toit d'un immeuble et son rayon peut atteindre plusieurs kilomètres. Une microcellule dessert des zones de plus faible rayon de quelques centaines de mètres. Elle met en oeuvre une ministation de base dont l'aérien est situé généralement en dessous du toit des bâtiments, sur des poteaux d'éclairage par exemple.

Dans ces systèmes la réutilisation importante des fréquences, en particulier dans des zones de forte densité d'abonnés, fait apparaître des interférences importantes en co-canal et sur des canaux adjacents. Une planification du réseau est donc nécessaire pour éliminer ces interférences. Cette planification est réalisée par un opérateur qui dispose d'un certain nombre d'outils logiciels et matériels lui permettant d'apprécier la conformité entre la population d'abonnés à desservir et la capacité du réseau mis en place.

L'outillage logiciel permet à l'opérateur de prévoir l'implantation des stations de base et leur caractéristiques en fonction de la population d'abonnés à desservir.

L'outillage matériel est transporté sur des véhicules. Il comporte une fonction de trace permettant le stockage de mesures effectuées sur le réseau.

Dans le cadre d'un réseau GSM, le problème d'interférences principal a lieu sur la liaison descendante entre station de base et mobile car les stations de base sont généralement placées sur des points hauts idéaux pour l'émission de signaux à de longues distances. L'ingénierie du réseau prévoit généralement un « tilt », c'est à dire une inclinaison des antennes afin, de forcer le rayonnement de la station de base à ne recouvrir que le territoire intérieur à sa cellule. Mais ce « tilt » n'est pas toujours suffisant pour éviter des rayonnements intempestifs vers des cellules adjacentes qui sont la cause d'interférences entre les émissions des différentes stations de base.

Le problème est alors pour l'opérateur d'identifier la provenance des interférences détectées dans les cellules voisines. Cette détection s'effectue ordinairement à l'aide de mobiles de trace relativement peu sophistiqués dont l'équipement est similaire de celui équipant les mobiles de communication habituels. Ces mobiles de trace fournissent à l'opérateur les informations utilisées par les mobiles habituels pour qualifier une communication c'est à dire les informations RX LEVEL et RX QUAL. Ces informations, dont le mode d'obtention est décrit dans la norme GSM permettent de qualifier le niveau de signal reçu (RX LEVEL) ainsi que la qualité de la communication (RX QUAL). Dans ces conditions une situation d'interférence est détectée lorsque le niveau du signal reçu est fort alors que la qualité de la communication est déclarée mauvaise. Le problème pour l'opérateur est alors d'identifier le brouilleur alors que le mobile de trace n'en fournit aucun identifiant ou marquant.

En outre, les outils logiciels de planification sont incapables de prendre des particularités locales comme par exemple une ouverture dans une rangée d'immeubles qui favorise des rayonnements indésirables.

La procédure suivie par l'opérateur fait largement appel à son expérience. Elle consiste, par déduction à l'aide de la base de données de planification, à identifier la station perturbatrice en la déconnectant momentanément du réseau afin de vérifier l'amélioration de la qualité des communications. Cependant ces opérations restent contraignantes car d'une part, elles demandent une très bonne expérience terrain à la personne chargée d'effectuer l'analyse et d'autre part, la déconnexion des stations de base suspectes conduit à une dégradation du service. En outre, dans une configuration très urbanisée comme c'est par exemple le cas dans une ville comme Paris où le déploiement microcellulaire est considérable, l'analyse basée sur l'expérience n'est pratiquement plus envisageable.

Le document de MATHAUER V intitulé : <Optimale funkzellenplanung' nachrichten electronik und telematik>, vol. 46, n° 6, 1er juin 1992, page 317/318, 320 XP000471604 décrit un système permettant une planification optimale des réseaux cellulaires. Pour cela, le système envoie un signal permettant de simuler une station de base BTS, afin de choisir la position la meilleure.

Le but de l'invention est de pallier les inconvénients précités en proposant une solution de détermination fiable d'interférences entre fréquences de trafic qui ne disposent pas intrinsèquement de marquants.

A cet effet, l'invention a pour objet, un procédé d'analyse des interférences dans un système de radiocommunication cellulaire comportant des fréquences de balise et des fréquences de trafic caractérisé en ce qu'il consiste pour rechercher sur une fréquence d'analyse déterminée et à l'intérieur d'une cellule la provenance d'interférences causées par des cellules voisines,

- à effectuer une synchronisation multivoies sur les séquences d'apprentissage des fréquences de balise pour déterminer le nombre de stations de base utilisant la fréquence d'analyse comme fréquence de balise,

- à démoduler après filtrage spatial les identifiants des stations de base émettrices des fréquences de balise sur lesquelles une synchronisation a été prise,
- à effectuer une synchronisation multivoies sur les séquences d'apprentissage des fréquences de trafic pour déterminer le nombre de stations de base utilisant la fréquence d'analyse comme fréquence de trafic.

L'invention a également pour objet un dispositif pour la mise en oeuvre du procédé précité.

D'autres caractéristiques et avantages de l'invention apparaîtront dans la description qui suit faite en regard des dessins annexés qui représentent :

- La figure 1, un exemple d'architecture connue d'un système GSM,
- La figure 2, la structure d'un réseau GSM,
- La figure 3, un mode de réutilisation de fréquences,
- La figure 4, un mode de réalisation fonctionnel d'un dispositif d'analyse d'interférences selon l'invention,
- Les figures 5 et 6 des modes d'implantation de réseaux d'antennes du dispositif représenté à la figure 4,
- La figure 7 un algorithme d'identification de stations de base sous la forme d'un organigramme,
- La figure 8, des formats des bursts de données FCH, SCH, et de trafic du système GSM,
- La figure 9, la structure de la multi-trame 51 de la fréquence balise du système GSM,
- La figure 10, le mode de codage d'un premier niveau d'identification émis sur les bursts de type SCH du système GSM,
- La figure 11, le mode de codage d'un deuxième niveau d'identification permettant d'identifier l'identité de la cellule qui est transmise par une station de base sur la fréquence de balise à l'aide des bursts BCCH.
- La figure 12, un exemple de résultats d'intercorrélation effectuées sur les séquences de référence des bursts de trafic du système GSM pour le tri des bursts TCH,
- La figure 13, une illustration d'un cas de fausse alarme produites par les pics secondaires obtenus en résultat de l'intercorrélation des séquences de référence,
- La figure 14, une représentation sous la forme d'un organigramme d'un algorithme de tri principal des bursts TCH pour éliminer les fausses alarmes,
- La figure 15, un algorithme de tri préliminaire des bursts TCH sous la forme d'un organigramme
- La figure 16, un graphe de diversité spatiale obtenue en sortie des capteurs du système antennaire du dispositif de la figure 4,
- La figure 17, un schéma de principe simplifié d'un démodulateur mis en oeuvre pour la réalisation d'un dispositif selon l'invention,
- La figure 18, un schéma pour illustrer le principe de fonctionnement d'un filtrage spatial mis en oeuvre dans le dispositif selon l'invention,
- Les figures 19 et 20, des diagrammes montrant des performances en anti-brouillage qui peuvent être obtenues par la mise en oeuvre du procédé selon l'invention,
- La figure 21, une structure d'égaliseur pouvant être mis en oeuvre pour la réalisation du dispositif selon l'invention.
- La figure 22, un schéma illustrant le test des ambiguités de synchronisation entre séquences TSC.
- La figure 23, un deuxieme mode de réalisation fonctionnel d'un dispositif d'analyse d'interférences selon l'invention.

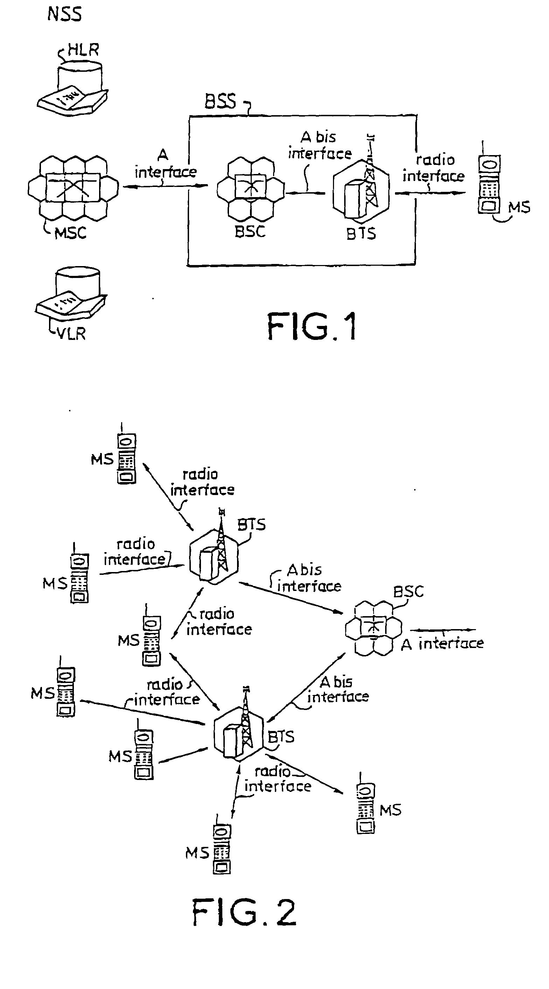

L'architecture du système GSM qui est représentée à la figure 1 permet d'assurer des communications numériques entre des mobiles et des abonnés du réseau public commuté. Pour que le système puisse offrir ces services, une série de fonctions sont nécessaires. Ces fonctions sont celles requises par tout réseau de mobiles. Ce sont notamment la fonction de numérotation, la fonction d'acheminement vers un usager mobile, la fonction de transfert de cellules etc. Ces fonctions sont regroupées dans des entités fonctionnelles représentées schématiquement aux figures 1 et 2. Elles sont composées de stations mobiles MS, de sous systèmes radio BSS et de sous systèmes de gestion et d'acheminement NSS. Les références MS, BSS et NSS sont respectivement les abréviations anglo-saxonnes pour « Mobile station », « Base Station System », et « Network and Switching Sub-System ».

Par station mobile il faut entendre un équipement physique qui est utilisé par un usager qui se déplace au travers de cellules d'un réseau. Cette station mobile permet à l'usager d'accéder aux services de télécommunication offerts. Différents types de stations mobiles existent, elles se différencient suivant qu'elles sont montées sur des véhicules, ou qu'elles ont la forme d'appareils portables ou portatifs.

Un sous-système radio est un équipement qui assure la couverture d'une zone géographique déterminée, appelée cellule. Il contient les matériels et les logiciels nécessaires pour communiquer avec les stations mobiles. Au plan fonctionnel un sous système radio assure une fonction de contrôle à l'aide d'un contrôleur de stations de base BSC et une fonction de transmission radio supportée par des stations de base BTS. Les appellations BSC et BTS sont les abréviations anglo-saxonnes pour « Base Station Controller » et « Base Transceiver Station ». Le territoire de chaque cellule est couvert à l'aide d'une station de base. Celle-ci gère les liaisons avec les stations mobiles MS à l'aide d'une interface appelée « radio interface ». Les relations entre les stations de base BTS et leur contrôleur de stations de base sont définies par une interface dénommée « interface Abis ». Les contrôleurs de station de base sont reliés au reste du réseau à l'aide d'une interface appelée « Interface A ».

Un sous-système de gestion et d'acheminement NSS se compose de trois éléments dénommés ci-après MSC, HLR, et VLR. L'élément MSC est un commutateur de service mobile chargé de l'acheminement des communications à partir de et vers les mobiles dans une cellule. L'élément HLR est une base de données où sont enregistrés les paramètres permanents d'un abonné ; il contient par ailleurs pour chaque mobile une information permettant de le localiser. Cette information est mise à jour de façon permanente. L'élément VLR est une base de données où est enregistrée une localisation fine du mobile en zone d'appel.

La structure du réseau est cellulaire, sa capacité est obtenue en maillant le territoire à l'aide de cellules desservies chacune par une station de base.

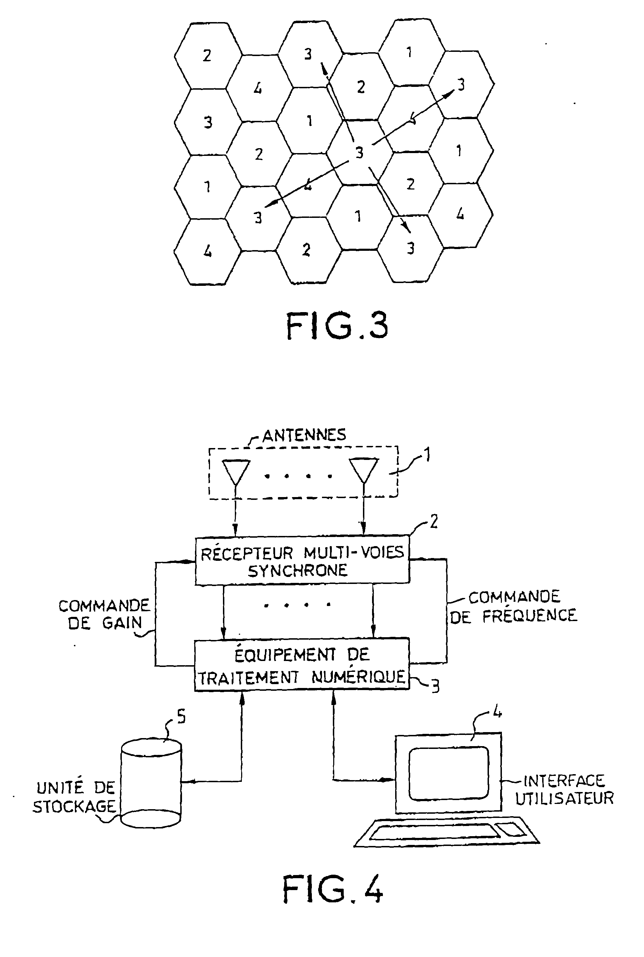

Une caractéristique importante d'un réseau GSM est la réutilisation des fréquences à travers le réseau. Le nombre de cellules juxtaposées utilisant les mêmes fréquences est indiqué par un motif de réutilisation. L'exemple de planification du réseau cellulaire de la figure 3 est celui d'un réseau où le motif de réutilisation a une taille de 4. On constate que la fréquence de la cellule n°3 est réutilisée à une faible distance et que des interférences peuvent survenir entre les cellules.

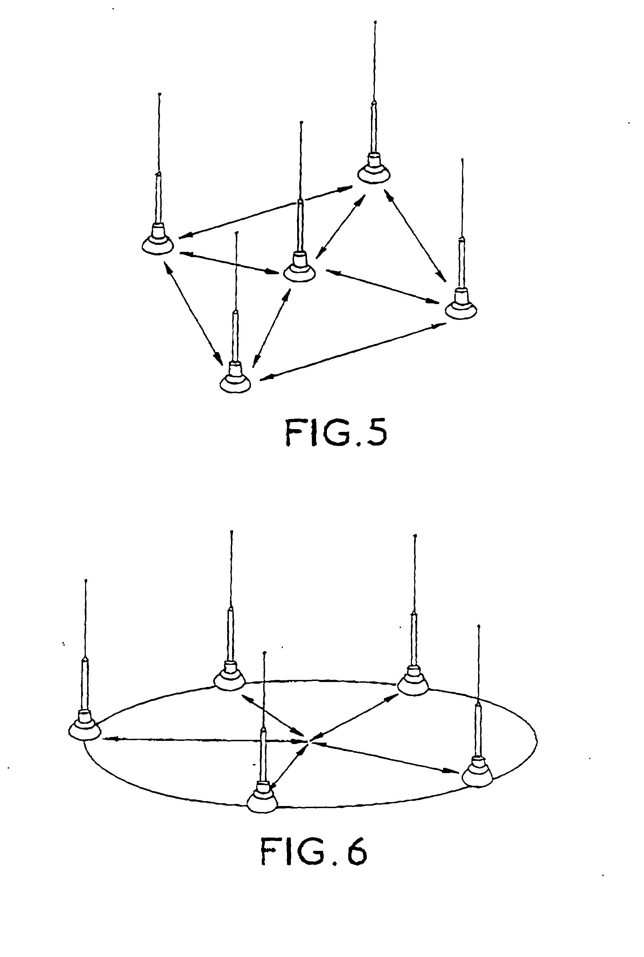

Le dispositif selon l'invention qui est représenté à la figure 4 permet d'identifier dans une cellule les interférences causées par des cellules voisines. Ce dispositif comprend un réseau d'antennes 1 couplé à un récepteur multivoies 2 permettant la réception synchrone des signaux reçus par chacune des antennes. Un équipement de traitement numérique 3 couplé au récepteur multivoie 2 permet d'effectuer la numérisation des signaux fournis par le récepteur 2 et d'assurer par l'intermédiaire d'une console 4 l'interface avec un utilisateur. Une interface de stockage 5 couplée à l'équipement de traitement numérique 3 assure le stockage des éléments détectés.

L'équipement de traitement numérique 3 détecte le type de canal fréquentiel sur lequel est positionné le système de réception et effectue une classification entre fréquences de balise et de trafic. Il détermine, sur un canal de type balise, le mot d'identification BSIC qui est l'abréviation anglo-saxonne « Base Station Identification Colour », de chaque cellule « Best server »et des cellules interférentes, obtenu après démodulation de bursts SCH ainsi que l'identité CI de chaque cellule et son code de localisation LAC, après démodulation des bursts BCCH. Enfin, sur un canal de type trafic il détermine la liste des séquences de référence TSC détectées sur le canal, ainsi que des niveaux de réception associés, recherche une fréquence de balise synchrone de la fréquence de trafic et la démodule afin de fournir la liste des fréquences de trafic associées ; en cas de concordance entre la liste et la fréquence de trafic détectées, la fréquence de balise est décodée pour fournir l'identité Cl, et le code de localisation LAC. Le synchronisme entre fréquence de balise et fréquence de trafic correspond à une concordance temporelle dans l'émission des bursts sur les deux fréquences.

Le réseau d'antennes 1 peut être constitué à titre d'exemple, d'antennes connues sous la désignation GSM/DCS1800 disposées sur le pavillon d'un véhicule en s'assurant que l'écartement entre chaque éléments est au moins égal à 0,5 fois la plus grande longueur d'onde λ utilisée de façon à obtenir pour chaque émission des états de fading indépendants sur chaque capteur. La répartition géométrique importe peu et le nombre d'antennes employé peut être variable, cependant le chiffre 5 correspond à un bon équilibre entre performances et complexité de traitement. Des exemples d'implantation d'antennes sont montrés aux figures 5 et 6.

Afin d'offrir une souplesse d'utilisation et d'exploitation, les fonctions du dispositif peuvent être complétées par une fonction de positionnement de type GPS afin de corréler les hypothèses de brouillage avec la planification du réseau et le lieu de la mesure, et une fonction de téléopération et de télémesure, afin d'avoir un équipement autonome sur le lieu de la mesure.

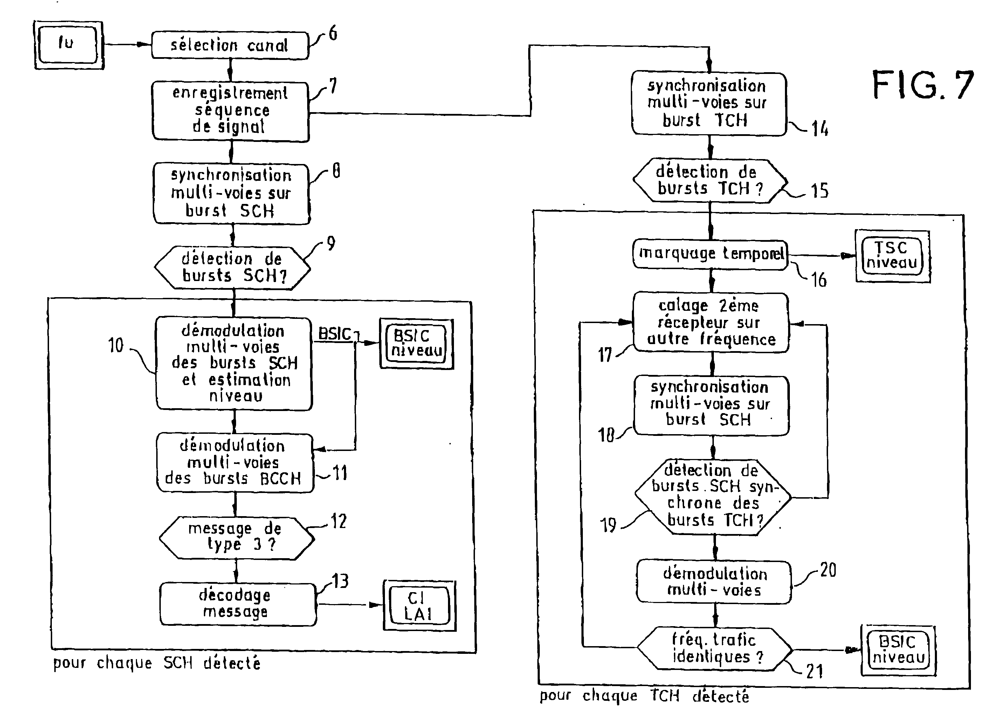

L'identification des stations de base mises en cause par un phénomène d'interférence a lieu suivant les étapes 6 à 21 du procédé représenté sur l'organigramme de la figure 7. Ce procédé permet d'effectuer pour chaque canal sélectionné d'une part, la recherche des stations de base utilisant ce canal comme fréquence de balise, avec un décodage des messages de type 3 pour obtenir l'identité de la cellule CI et le code de sa localisation LAC et d'autre part, la recherche des stations de base utilisant ce canal comme fréquence de trafic, ainsi que la recherche de la fréquence de balise associée en identifiant celle-ci grâce au synchronisme des bursts émis sur les fréquences de balise et de trafic par une même station de base.

Cette identification a lieu en tenant compte des spécificités du système GSM, à savoir qu'il prévoit deux types d'utilisation des canaux fréquentiels associés à chaque station de base, un canal fréquentiel de balise et des canaux fréquentiels de trafic.

Le canal fréquentiel de balise (un seul par station) permet à la station de base de diffuser aux mobiles desservis par la cellule un certain nombre d'informations de signalisation non dédiées à une communication ou à un mobile. Il sert également de référence fréquentielle pour les mobiles et est émis à un niveau constant même s'il n'est pas porteur d'information de trafic car une émission à un niveau constant permet aux mobiles d'effectuer une identification rapide. Il véhicule également des bursts spécifiques (bursts SCH) permettant une synchronisation temporelle et l'identification des séquences de référence (TSC) qui sont utilisées pour les bursts de signalisation.

Les canaux fréquentiels de trafic sont tous les autres canaux fréquentiels utilisés, ils véhiculent principalement des bursts de trafic (burst TCH) et présentent de l'énergie uniquement lorsqu'une communication est véhiculée sur les bursts TCH.

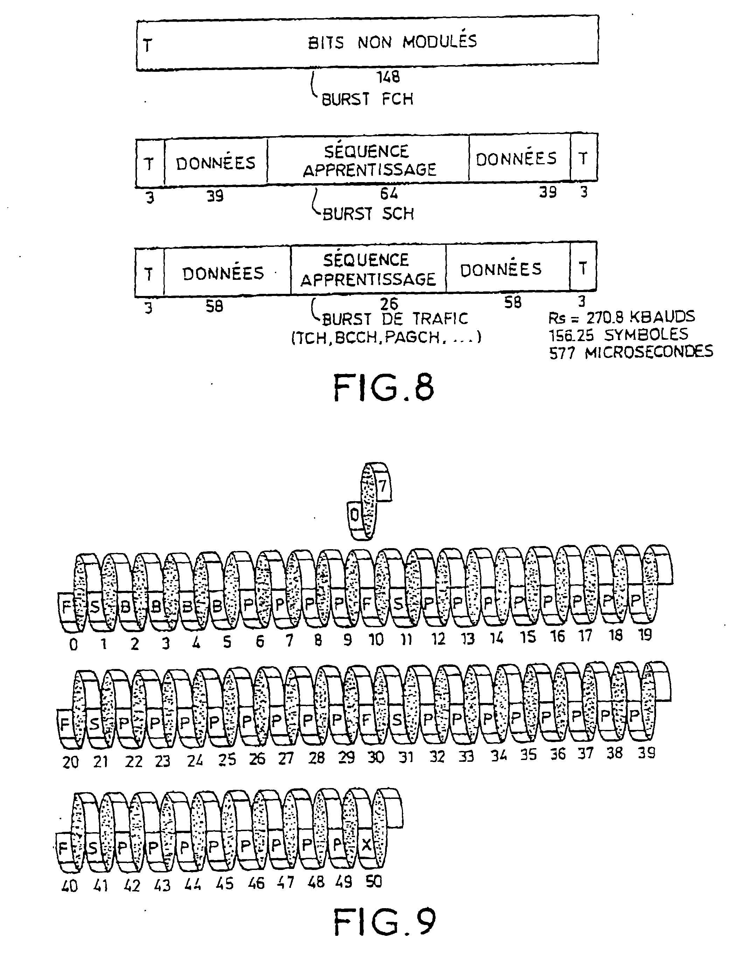

Suivant l'organigramme de la figure 7 lorsque le dispositif est positionné à l'étape 6 sur une fréquence qu'il doit analyser, sa première tâche est d'identifier à quels types de canal fréquentiel il est confronté. Si un canal de balise est présent sur le canal analysé l'identification est aisée et se fait sur l'identifiant CI de la cellule émettrice alors que dans le cas d'un canal de trafic cet identifiant n'existe pas hormis par le biais de la séquence TSC utilisée. Pour ce faire, le dispositif effectue à l'étape 8 une synchronisation multivoies de burst SCH sur une séquence de référence longue de 64 bits comme indiqué sur la figure 8. Cette séquence présente des performances d'autocorrélation suffisantes qui permettent d'identifier aisément des situations d'interférences signalés par plusieurs pics de synchronisation. Ces bursts sont présents sur l'intervalle temporel TN0 de la multitrame 51 de la fréquence de balise, comme indiqué sur la figure 9. Sur cette figure sont également représentés par leur première lettre, les emplacements des bursts FCH, BCCH et PAGCH. Les bursts FCH repérés par la lettre F sont des bursts non modulés qui correspondent à une porteuse et qui permettent aux mobiles d'effectuer une détection rapide des fréquences de balise. Les bursts BCCH repérés par la lettre B sont des bursts de signalisation générale, à destination de tous les mobiles qui transportent la signalisation et qui contiennent les informations d'identification des cellules (CI) et de localisation (LAC). Les bursts PAGCCH repérés par la lettre P sont des bursts d'appels de mobiles. Ces deux derniers types de bursts sont comme les bursts TCH des bursts de trafic qui véhiculent la phonie.

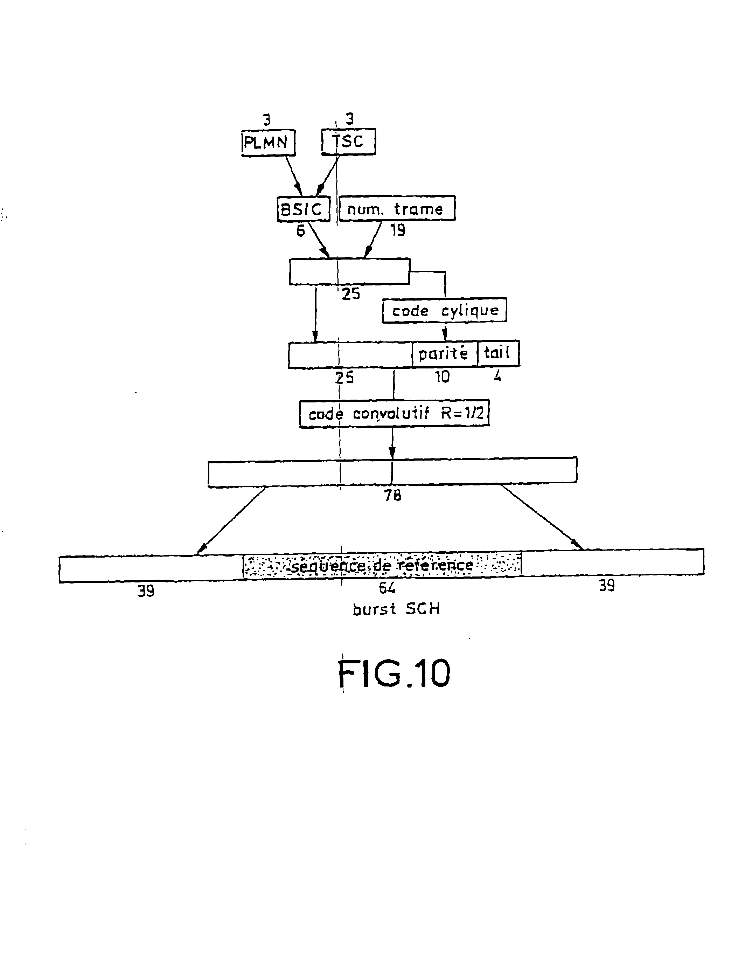

Le procédé continue à l'étape 10 de l'organigramme de la figure 7, en effectuant une démodulation multivoies des bursts SCH repérés sur la figure 9 par la lettre S, afin d'extraire le code d'identification des stations BSIC. Le code BSIC contient deux informations. Une première information indique le numéro PLMN du réseau et une deuxième information indique la séquence de référence. TSC qui va être utilisée par la station de base sur les bursts de signalisation. Cette deuxième information est codée de la manière représentée à la figure 10. Le codage met en oeuvre un code cyclique pour la génération d'un code correcteur d'erreur CRC ainsi qu'un code convolutif pour améliorer les performances de démodulation. L'intérêt de décoder le code BSIC est qu'il permet l'identification des stations de base en présence. Une consultation d'une base de donnée de planification permet ensuite d'isoler les stations présentant les mêmes émissions de fréquence balise et le même code BSIC.

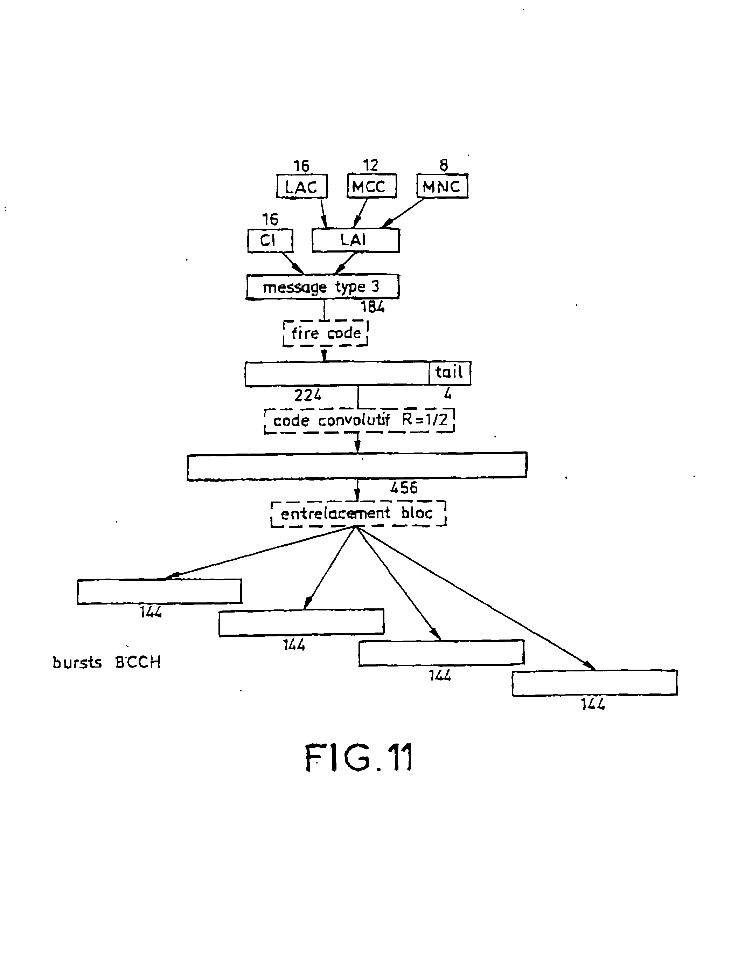

Un deuxième type d'information qui permet d'identifier les stations en présence est l'information CI qui est l'abréviation anglaise de « cell identity ».Cette information est transmise par les stations de base sur la fréquence balise à l'aide des bursts BCCH. Ces bursts ont pour but de véhiculer des messages de signalisation système notamment le message de type 3 qui contient les informations d'identification CI et LAI, LAI étant l'abréviation anglo-saxonne de « Location Area Identification » qui permet d'identifier un groupement de cellules dans lequel est diffusé un appel. Le message de type 3 est émis de manière cyclique sur la fréquence de balise au rythme de deux fois par cycle de deux secondes. Ceci donne la possibilité au dispositif de stocker au minimum une seconde de signal et de disposer ainsi d'au moins une récurrence du message de type 3. Les informations CI et LAI sont codées suivant le schéma de la figure 11. Ce codage consiste à répartir le message sur les 4 bursts BCCH de la multitrame 51 à partir d'un entrelacement de bloc résultant d'un codage convolutif du message de type 3 auquel est adjoint un code CRC correcteur d'erreur.

L'identification des séquences de référence utilisées sur les canaux a lieu par l'exécution des étapes 14 à16 de l'organigramme de la figure 7. Les étapes 14 et 15 sont des étapes préliminaires qui consistent à effectuer d'abord à l'étape 14 une synchronisation multivoies sur les bursts TCH avant d'effectuer leur détection à l'étape 15. Seulement 3 types de forme d'ondes bursts représentés à la figure 8 sont utilisés. Elles concernent les bursts FCH, les bursts SCH et les bursts de trafic. Tous les bursts BCCH, PAGCH, etc. sont en fait des bursts disposant de la même structure physique que les bursts TCH et qui consistent en une séquence de 26 symboles encadrés de deux zones de données de 58 symboles utiles. En fait la norme GSM prévoit l'utilisation de 8 différentes séquences de référence encore appelées en anglais TSC « Training Séquence code » qui permettent une séparation des communications utilisant la même fréquence. En conséquence, la synchronisation multivoies de l'étape 14 a lieu en effectuant successivement un test de chacune des séquences possibles et en fournissant la position des bursts détectés ainsi que les séquences détectées.

Les étapes 16 à 21 de la figure 7 ont pour but d'identifier la station de base émettrice de la fréquence de trafic perturbatrice. Pour cela, le procédé effectue à l'étape 16 un marquage temporel de l'arrivée des bursts de trafic perturbateurs, et positionne le système sur une autre fréquence à l'étape 17. Sur cette fréquence, il va rechercher à l'étape 18, des bursts SCH respectant un rythme TDMA cohérent avec celui indiqué par le marquage temporel de l'étape 16. L'étape 19 permet d'effectuer la détection : si elle trouve un burst SCH qui respecte le rythme TDMA, alors le procédé passe à l'étape 20, sinon il revient à l'étape 17 pour changer de fréquence. L'étape 20 permet de réaliser la démodulation de la fréquence de balise synchrone de la fréquence de trafic et de fournir parmi les messages de signalisation la liste des fréquences de trafic utilisées par la cellule qui possède cette fréquence de balise. L'étape 21 permet de comparer cette liste à la fréquence de trafic brouilleuse. En cas de concordance, le cellule brouilleuse est trouvée et le procédé fournit son identification CI et son code BSIC, en décodant les bursts SCH de la fréquence de balise.

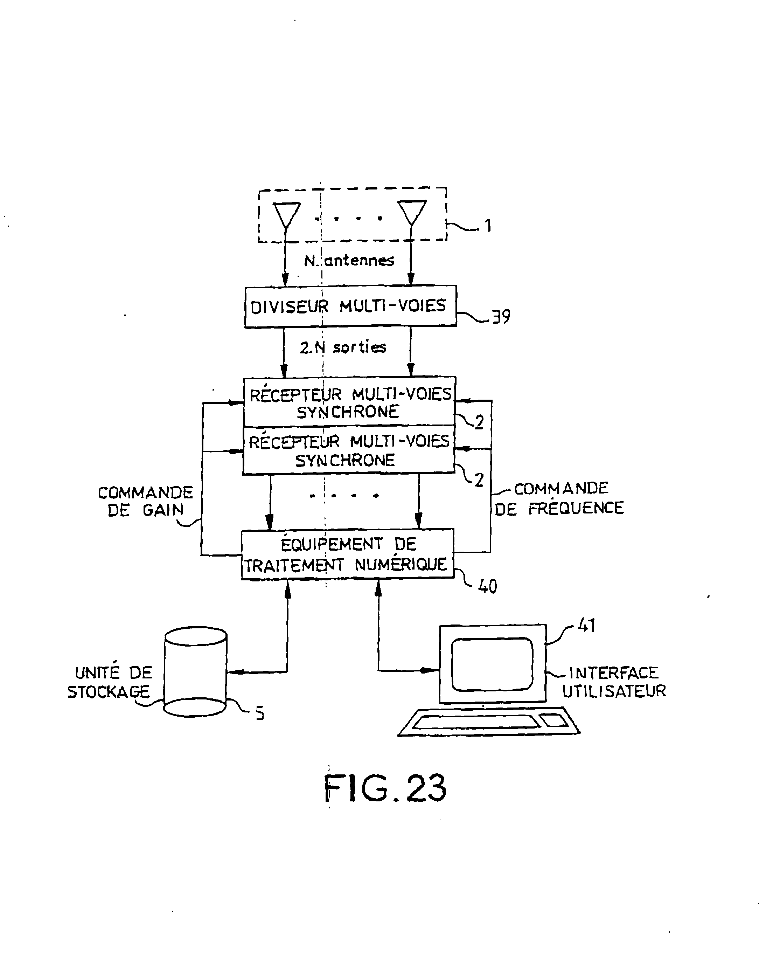

Afin de faciliter le marquage temporel de l'arrivée des bursts de trafic brouilleur et afin d'éviter les dérives d'horloge trop importantes, il est possible d'utiliser une structure de dispositif tel que représenté sur la figure 23, où l'on trouve :

- le même réseau d'antenne 1 que sur la figure 4,
- un diviseur 39 (N vers 2N) qui permet de diviser le signal reçu sur chaque antenne,
- deux récepteurs 2 qui sont positionnés, l'un sur la fréquence brouilleuse et l'autre qui recherche la fréquence de balise associée,
- un équipement numérique 40 permet de numérisé deux fois plus de signaux que l'équipement 3 de la figure 4 et qui permet d'effectuer une recherche de bursts TCH en permanence sur le signal recu par le premier récepteur et une recherche de bursts SCH synchrone au sens du TDMA sur le signal reçu par le deuxième récepteur ; la comparaison de synchronisme TDMA est effectuée dans l'équipement 40 et présenté à l'utilisateur à l'aide d'un interface 41.

Afin d'éviter l'utilisation du diviseur 39, il est possible d'utiliser tout simplement deux fois plus d'antenne pour former un réseau avec 2N antennes.

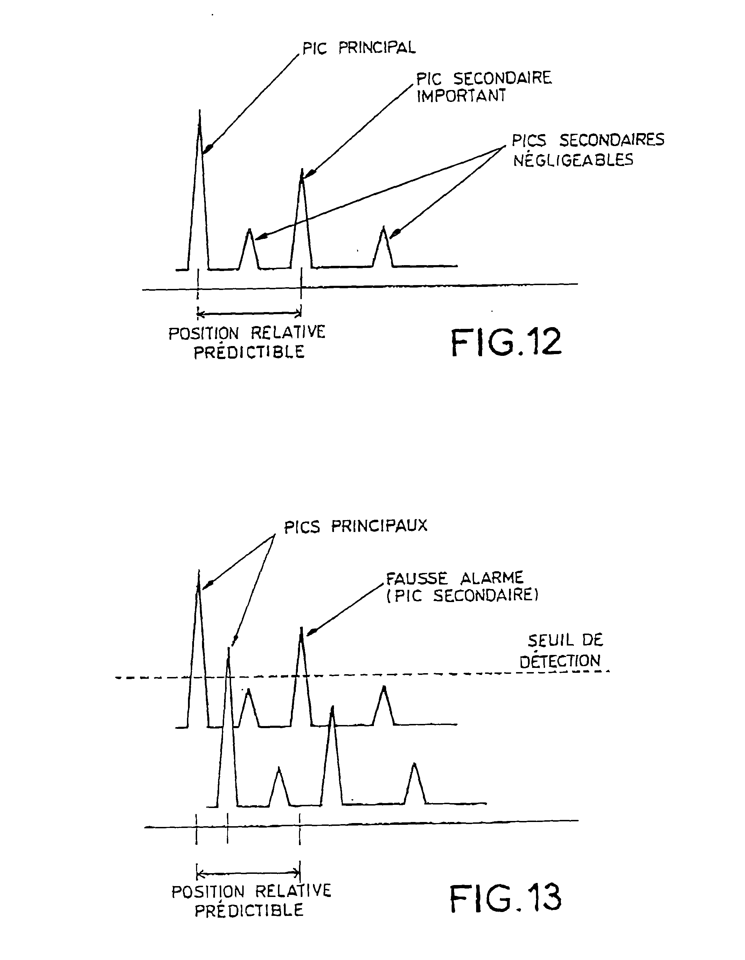

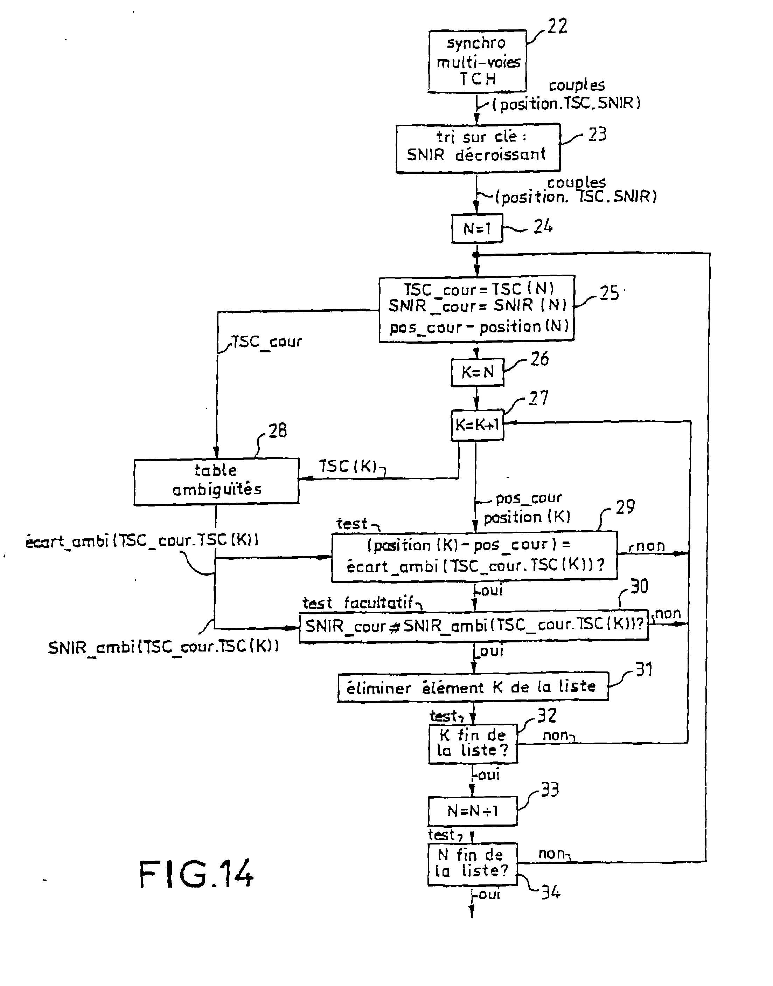

Comme la norme GSM prévoit l'utilisation de 8 séquences de référence possibles pour les bursts de trafic dont la longueur n'est que de 26 symboles, il s'ensuit des performances limitées en ce qui concerne l'intercorrélation entre les séquences celle ci faisant apparaître, comme le montre la figure 12, des pics secondaires de niveaux importants entre les différentes séquences. Compte tenu des variations de dynamique importantes dans la réception des signaux, ces pics secondaires sont la cause comme le montre la figure 13, de fausses alarmes dans le traitement multivoies. Ce niveau de fausse alarme est limité en utilisant un algorithme de tri qui se déroule suivant les étapes 22 à 34 de l'organigramme de la figure 14.

Cet algorithme prend en compte la prédiction qui peut être effectuée sur la position des pics secondaires et sur leur niveau. Le traitement commence à l'étape 22 par une détection des bursts TCH, suivie à l'étape 23 par un tri des bursts détectés en les triant dans une liste par ordre décroissant de leur rapport signal à bruit estimé SNIR. Durant l'étape 22 le repérage de la position des séquences de référence est effectué et le SNIR correspondant à chaque position est estimé.

L'étape 24 permet d'initialiser le processus de filtrage en positionnant un pointeur N sur la première position dans la liste.

L'étape 25 a pour but de sélectionner le TSC courant, le SNIR courant et la position courante de l'élément sélectionné dans la liste par le pointeur N. L'étape 26 permet de positionner un deuxième pointeur K sur la même position que le premier pointeur. L'étape 27 permet de passer le deuxième pointeur K sur la position suivante dans la liste.

L'étape 28 permet d'adresser une table d'ambiguïté avec comme entrée les TSC utilisés par les éléments de la liste pointés par les deux pointeurs N et K. Cette table détermine la liste des écarts d'ambiguïté en temps possible pour les deux TSC sélectionnés, ainsi que pour chaque écart d'ambiguïté le SNIR associé.

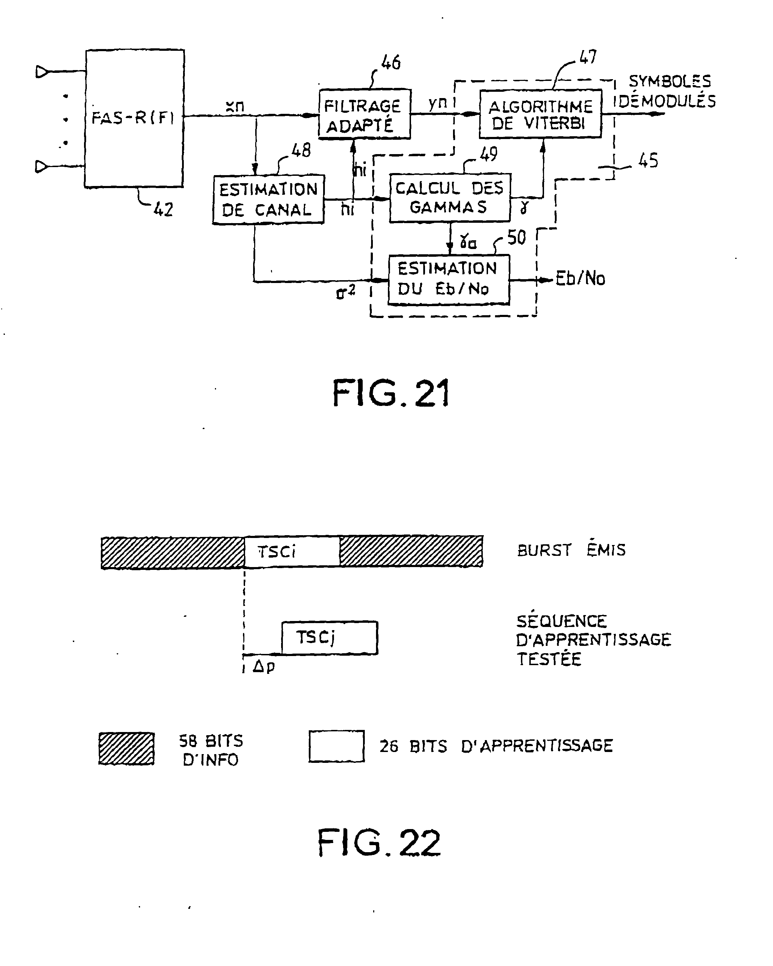

Cette liste peut être déterminée par simulations de la façon suivante : le signal émis est composé d'une suite de bursts GSM, formés de deux séquences de 58 bits d'information aléatoires disposées alternativement de part et d'autre de chacune des huit séquences d'apprentissage $TSC_i$ ($i = 0, ..., 7$) définies dans la norme. Pour chacune des huit séquences d'apprentissage $TSC_i$, un grand nombre de bursts sont émis, et le critère de synchronisation correspondant à chacune des huit séquences $TSC_i$ ($j = 0, ..., 7$) est calculé pour les positions de synchronisation $\Delta p$ comprises entre -35 (soit -16 bits) et + 35 (soit + 16 bits) comme montré à la figure 22. Pour chacun des couples ($i$ : séquence émise, $j$ : séquence testée), on note les positions $\Delta p$ pour lesquelles le seuil a été dépassé au moins une fois. Pour ces positions, on calcule la valeur moyenne du critère de synchronisation lorsque le seuil est dépassé, ainsi que le pourcentage des cas ou le seuil a été dépassé. Les résultats sont stockés dans la table d'ambiguïtés, exploités par l'algorithme de tri, qui tient compte de ces valeurs pour décider qu'une séquence $TSC_i$ détectée sur une position p ne doit pas être retenue puisqu'elle correspond en réalité à une séquence $TSC_i$ émise sur la position p + $\Delta p$.

L'étape 29 compare l'écart mesuré pour les deux éléments de la liste avec la liste des écarts d'ambiguïté en temps possibles pour les TSC. Si une concordance existe le procédé continue à l'étape 30, sinon il passe à l'exécution de l'étape 27 pour positionner le deuxième pointeur K sur l'élément suivant de la liste.

L'étape 30 est optionnelle. Elle effectue une comparaison grossiere entre les SNIR de la table d'ambiguïté et ceux détectés.Si une concordance existe,le procédé continue à l'étape 31,si non il retourne à l'étape 27 afin de positionner le deuxième pointeur K sur un autre élément de la liste.

L'étape 31 permet d'éliminer l'élément pointé par K.

L'étape 32 vérifie s'il reste des éléments dans la liste à parcourir par le pointeur K, si oui le procédé retourne à l'étape 27 pour incrémenter le pointeur K. Sinon il continue à l'étape 33 pour incrémenter le pointeur N.

L'étape 34 achève le processus en vérifiant s'il reste des éléments dans la liste pour incrémenter le pointeur N. Si oui, alors le procédé retourne à l'étape 25. Sinon le processus est terminé.

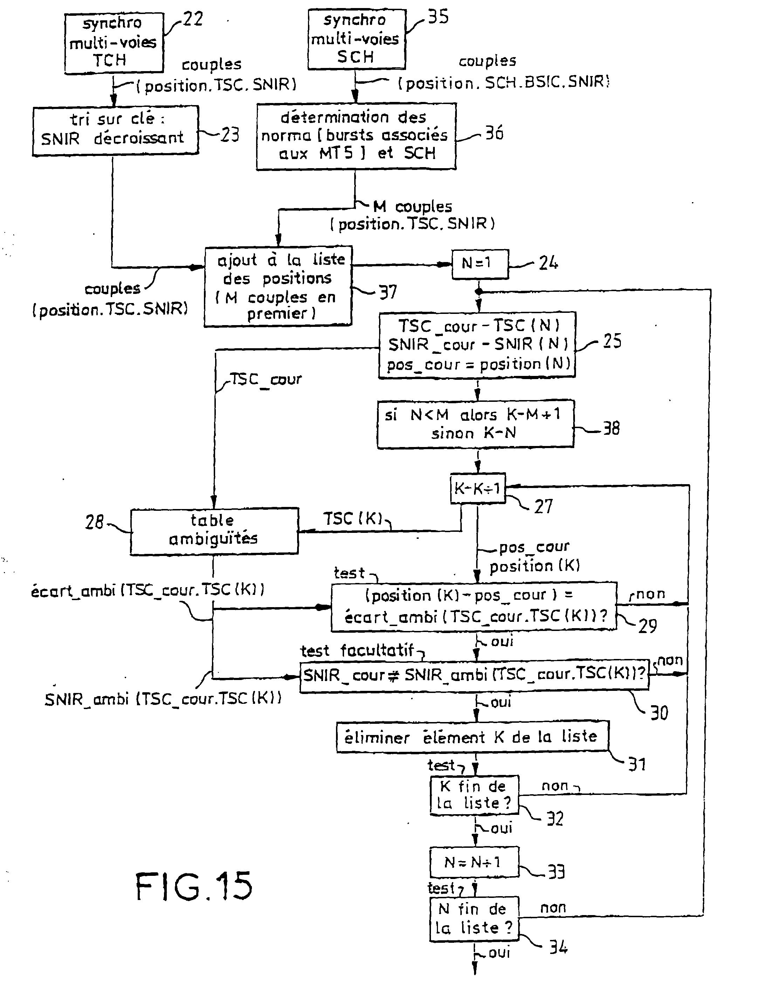

Cet algorithme peut toutefois être optimisé, dans le cas d'un brouillage de type trafic sur une fréquence de balise. Dans ce cas en effet, les positions des bursts de trafic sur la fréquence de balise sont connues à partir des positions des bursts SCH.Les positions des bursts TCH d'une fréquence de balise étant parfaitement connues celles-ci, ne doivent pas être filtrés par l'algorithme de tri. C'est ce qui est représenté sur l'organigramme de la figure 15,ou les positions correspondant à ces bursts sont positionnés en tête de la liste et ne sont pas remis en cause dans le filtrage.

Le traitement commence à l'étape 35 par le repérage des bursts SCH, la détermination du BSIC (qui fournit la séquence TSC des bursts BCCH), et la détermination des rapports signal à bruit SNIR correspondants. On constitue ainsi une liste de M positions qui se sont pas remis en cause.

En parallèle sont menées les étapes 22 et 23 identiques à celles de la figue 14, qui fournissent une autre liste. Ces deux listes sont adjointes lors de l'étape 37 en prenant soin de placer les M éléments précédents en tête de la liste, et d'éliminer les redondances.

Le traitement de filtrage peut ensuite démarrer, tel que précisé sur la figure 15. Il est identique à celui de la figure 14, hormis à l'étape 38 qui ne permet pas de positionner le pointeur K dans le haut de la liste (uniquement après le M-ième éléments de la liste).

Afin de réduire le nombre de comparaisons à effectuer dans l'algorithme de tri, les positions de synchronisation pour chaque TSC peuvent être regroupées par classe d'équivalence modulo 8 I.T. (c'est-à-dire modulo un intervalle temporel égal à 8*156.25*48/13 $\mu$s, correspondant au rythme de la trame GSM).Chaque classe d'équivalence représente ainsi une position de synchronisation inférieure au nombre d'échantillons contenus dans 8 I.T., et pour chacune d'entre elles, on indique le nombre de position de synchronisation associé, ainsi que le SNIR moyen (moyenne des SNIR estimés pour chaque élément de la classe). L'algorithme de tri peut alors être mis en oeuvre de la façon décrite ci-dessus en utilisant les positions de synchronisation de chacune des classes d'équivalence ainsi définies. Deux contraintes supplémentaires peuvent être utilisées pour optimiser l'algorithme de tri :

- Le pourcentage des cas où le seuil est dépassé, stocké dans la table d'ambiguïté, peut être utilisé : pour éliminer l'élément K de la liste, le rapport entre le nombre d'éléments de la classe d'équivalence associée à la position (K) et le nombre d'éléments de la classe d'équivalence associée à la position courante doit être du même ordre de grandeur que le pourcentage des cas où le seuil est dépassé.
- Un pré-tri peut être effectué en éliminant les classes d'équivalences insuffisamment remplies suivant un seuil fonction du nombre maximum d'éléments dans chaque classe d'équivalence et du pourcentage minimum d'occupation pour décider qu'un canal TCH correspondant à une classe d'équivalence est actif : un canal TCH actif 1 % du temps par exemple a toutes les chances de correspondre à une fausse alarme et la classe d'équivalence correspondante est éliminée.

Un dispositif pour la mise en oeuvre du procédé est représenté à la figure 17. Celui ci comprend un dispositif de filtrage spatial 42 couplé à un dispositif d'extraction de messages et de décodage 43. L'exécution de la première étape du procédé qui consiste à détecter la présence de bursts SCH sur un canal de balise ou la présence de bursts TCH sur un canal de trafic peut être mise en oeuvre suivant la technique de synchronisation décrite dans la demande française de brevet N° FR 2715488 déposée au nom de la Demanderesse ayant pour titre « Procédé et dispositif permettant à un modem de se synchroniser sur un transmetteur de données numériques par voie hertzienne en présence de brouilleurs. »Cette technique permet à un modem de se synchroniser à l'aide de séquences d'apprentissage insérées dans la forme d'onde. Elle consiste à estimer la matrice de corrélation $R_{xx}$ des signaux reçus sur N capteurs du réseau d'antennes, à calculer la matrice de corrélation inverse $R^{-1}{}_{xx}$, à calculer des vecteurs d'intercorrélation $R_{Xd}$ entre les signaux X(k) reçus sur l'ensemble des N capteurs et un signal d'apprentissage ou -de référence connu pour calculer un critère de synchronisation multicapteur. Appliquée à l'invention cette technique permet de détecter la présence d'un burst de type SCH ou TCH sur un échantillon p de signal en fonction de la valeur d'un critère de synchronisation multivoies C(p) défini par la relation :

$$C(p) = \frac{\hat{r}_{Xd}(p)^+ . \hat{R}_{XX}^{-1}(p) . \hat{r}_{Xd}(p)}{\frac{1}{N} . \sum_{n=0}^{N} |d(n)|^2}$$

avec :

$$\hat{r}_{Xd}(p) = \frac{1}{N} . \sum_{n=0}^{N} X(n+p).d^*(n)$$

$$\hat{R}_{XX}(p) = \frac{1}{N} . \sum_{n=0}^{N} X(n+p).X(n+p)^+$$

La synchronisation est placée à l'instant d'apparition d'un échantillon (p) de signal lorsque la valeur C(p) du critère est supérieure à une valeur de seuil déterminée η. Pour chaque position de synchronisation détectée, le SNIR du trajet correspondant peut être estimé par la formule :

$$SNIR = \frac{C(p)}{1-C(p)}$$

Ce SNIR est utilisé lors de l'étape 30 de l'algorithme de tri des bursts TCH.

La mise en oeuvre de la synchronisation multi-voies nécessite donc, pour chaque position p testée, le calcul de $r_{Xd}(p)$, de $R_{XX}(p)$ de l'inverse de $R_{XX}(p)$ et du critère $r_{Xd}(p)$ $R^{-1}_{XX}(p)$. $r_{Xd}(p)$.

Afin de limiter la puissance de calcul de la synchronisation multi-voies, la matrice $\hat{R}_{XX}(p)$ est calculée et inversée toutes les P positions, c'est à dire pour les positions $p_0$ telles que p modulo P soit nul, en effectuant la corrélation sur N+P échantillons :

$$\hat{R}_{XX}(p_0) = \frac{1}{(N+P)} . \sum_{n=0}^{N+P} X(n+p_0).X(n+p_0)^+$$

Sur les P positions suivant la position $p_0$, le critère C(p) est calculé en utilisant $\hat{R}^{-1}_{XX}(p_0)$, le calcul de $\hat{r}_{Xd}(p)$ restant inchangé.

Dans les relations précédentes d(n),n=0,....,L, désigne le signal complexe correspondant à la séquence d'apprentissage des signaux SCH ou TCH, échantillonné à une fréquence Fe, et X(n),n=0,.....,N, désigne le signal multicapteur reçu à l'entrée du filtre temporel 21, échantillonné à la fréquence Fe.

Les positions de synchronisation détectées fournissent les informations de départ nécessaires pour la démodulation. Sur la figure 17 la démodulation est obtenue suivant deux étapes, une étape de filtrage spatial par le dispositif 42 et une étape d'égalisation monovoie par le dispositif 44. Le filtrage spatial permet d'une part, d'éliminer les interférences présentes sur un même canal ou sur un canal adjacent et d'autre part, d'obtenir un gain de diversité qui est obtenu en écartant suffisamment les capteurs les uns des autres pour qu'il reçoivent des états de fading indépendants. Le filtrage spatial peut être mis en oeuvre soit en utilisant une méthode connue de filtrage spatial sur réplique simple (FAS-R) qui conduit à séparer les différents multitrajets associés à une émission donnée, soit en utilisant une méthode de filtrage spatiale sur réplique filtrée (FAS-RF) qui permet quant à elle de prendre en compte l'ensemble de ces multitrajets.

Le filtrage spatial et l'égalisation sont mis en oeuvre dans l'invention en exploitant les séquences d'apprentissage SCH pour la démodulation des bursts SCH ou les séquences d'apprentissage TSC pour la démodulation des bursts BCCH.

8

La méthode de filtrage spatiale sur réplique est connue de l'homme de l'art et on pourra se reporter utilement à l'article ayant pour titre « Adaptive antenna systems » des auteurs B. WIDROW, P.E. MANTEY, L.J. GRIFFITHS, A. B. GOODE, publié dans Pro. IEEE, Vol 57, N°2, pp. 2143-2159, Dec. 1967.

La méthode de filtrage spatial sur réplique filtrée est décrite dans la demande française de brevet n° FR 2742619 déposée au nom de la demanderesse ayant pour titre: « Procédé d'égalisation multicapteur permettant une réception multicapteur en présence d'interférences et de multitrajets de propagation, et récepteur pour sa mise en oeuvre » et pour inventeurs MM. François PIPON, Pierre VILA et Didier PIREZ.

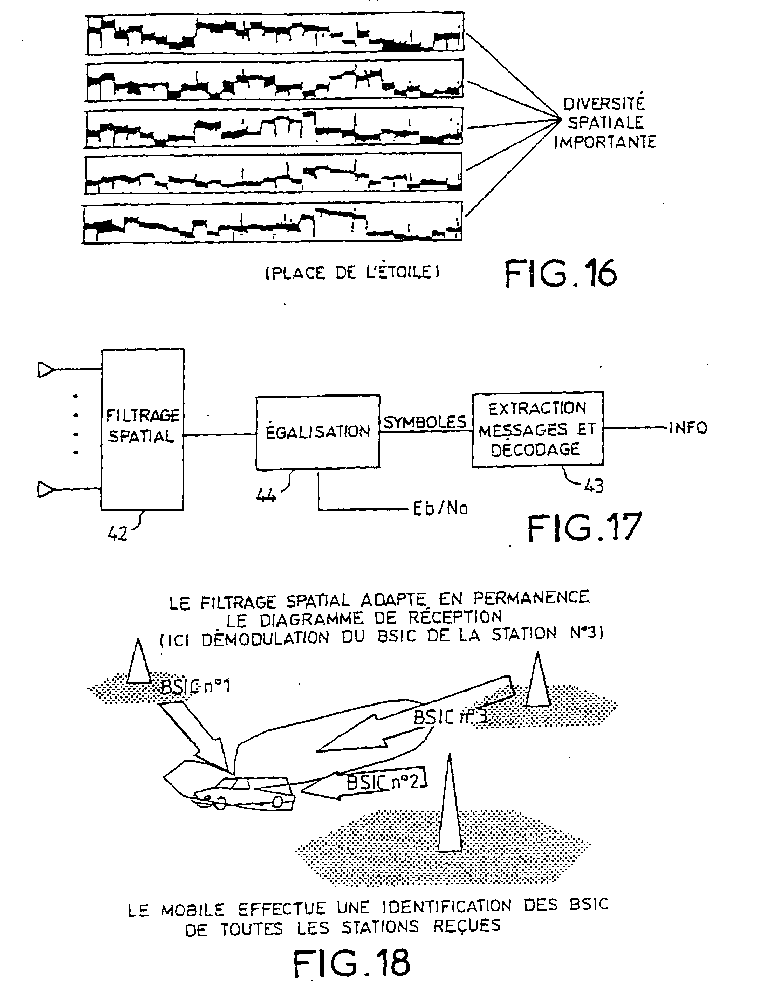

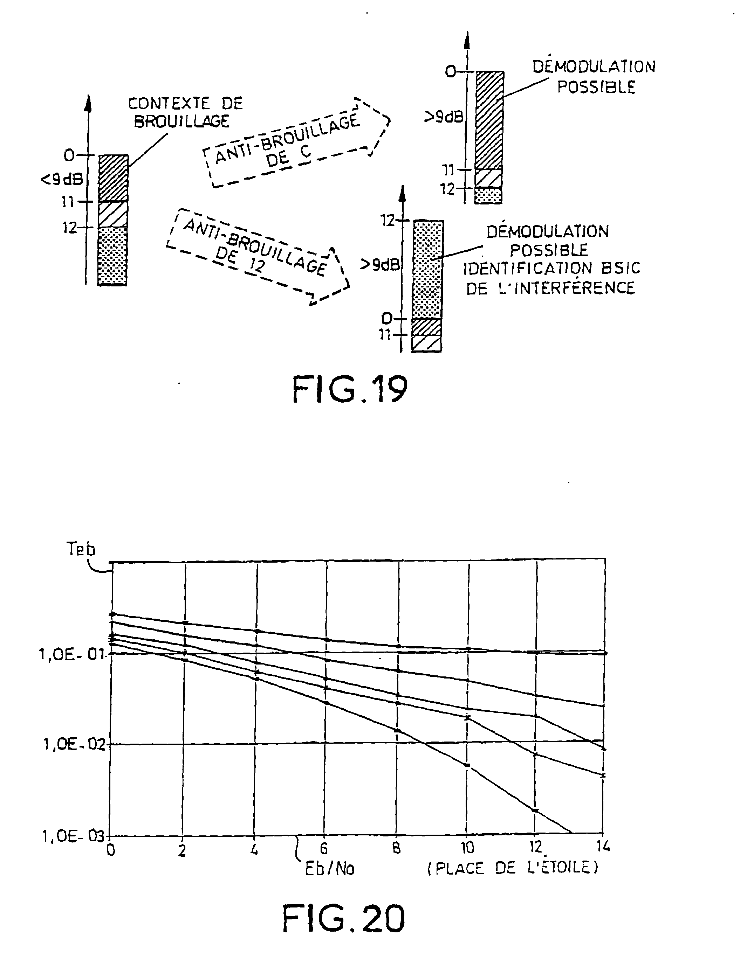

Comme le montre la figure 18 l'application d'un filtre spatial sur les signaux recus sur les antennes permet de modifier le diagramme de réception du système et donc de séparer les différents signaux reçus en formant des trous de réception dans la direction de signaux interférents afin de permettre de démoduler et d'identifier le signal émis par une station de base donnée. Un type d'amélioration qui peut être obtenu est représenté aux figures 19 et 20.

Un mode de réalisation du dispositif d'égalisation 44 est représenté à la figure 21. Celui-ci comprend un dispositif de calcul 45 couplé à un dispositif de filtrage spatial sur réplique 42 par l'intermédiaire d'un filtre adapté 46 et d'un dispositif d'estimation de canal 48. Le dispositif de calcul 45 effectue l'égalisation monodimensionnelle des signaux en sortie du filtrage spatial pour chacune des sources détectée. Pour cela il comprend un processeur de traitement du signal 47 convenablement programmé selon l'algorithme connu de Viterbi couplé d'une part, au filtre spatial 42 au travers du filtre adapté 46 et d'autre part, à un dispositif d'estimation de canal 48 au travers d'un dispositif de calcul des coefficients $\gamma$ 49 nécessaire à l'exécution de l'algorithme de Viterbi. Un dispositif de calcul d'estimation du rapport signal à bruit 50 est également couplé en sortie du dispositif de calcul 49 et à la sortie du dispositif d'estimation de canal 48. Le processeur 47 détermine la séquence de symboles transmise qui rend minimum la probabilité d'erreur de décision. L'égalisation monodimensionnelle peut également être réalisée par d'autres types d'algorithmes, moins complexes numériquement que l'algorithme de Viterbi, qui sont utilisés pour une réception monocapteur comme celui connu sous le nom de « M.algorithme » qui est une version simplifiée de l'algorithme de Viterbi ou encore l'égaliseur DFE, bien que ces égaliseurs conduisent à des résultats légèrement dégradés par rapport à ceux obtenus avec l'algorithme de Viterbi. Ils peuvent cependant être utilisés pour des applications ou la puissance de calcul disponible est insuffisante pour mettre en oeuvre ce dernier.

Le principe de l'égalisation monodimensionnelle qui est effectuée par le processeur 47 est décrit ci après en prenant pour modèle de modulation celui d'une modulation GMSK. Dans ce qui suit $(d_n)$ désigne la suite des bits transmis, prenant des valeurs '0' ou '1' et il est supposé que les données $d_n$ sont codées différentiellement avant d'être modulées. L'information transmise est donc constituée par la suite $(a_n)$, calculée à partir de la suite $(d_n)$ par les formules suivantes:

$$a_n = 1 \text{ si } d_n = d_{n-1} \text{ et } a_n = -1 \text{ si } d_n \neq d_{n-} . \tag{1}$$

On rappelle ici que la modulation GMSK est une modulation à phase continue qui peut s'exprimer de façon approchée sous la forme d'une modulation linéaire telle qu'elle est décrite dans l'article de M. P.A. LAURENT, ayant pour titre : «Exact and approximate construction of digital phase modulations by superposition of amplitude modulated pulse (AMP)", IEE Trans. Comm. vol 34 (1986) pp. 150-160.

En appelant Z(t) le signal modulé, celui ci est de la forme:

$$z(t) = \sum_n j^n b_n \, C_0(t) \quad \text{avec: } b_n = \prod_{k \le n} a_k . \tag{2}$$

où $C_0(t)$ est la première fonction principale de la modulation GMSK.

Le signal modulé z(t) peut aussi s'écrire sous la forme d'un produit de convolution, en notant $s_n = j^n b_n$ ,par la relation:

$$z(t) = \left( \sum_n s_n \delta(t) \right) * C_0(t) = s(t) * C_0(t) \quad \text{avec } s(t) = \sum_n s_n \delta(t) \tag{3}$$

dans laquelle la suite $(s_n)$ constitue la suite des symboles transmis. La démodulation consiste à déterminer la suite $(s_n)$ puis à remonter ensuite à la suite des bits émis $(d_n)$.

Le signal émis z(t) arrive sur le réseau de réception comportant K capteurs, après son passage dans le canal de propagation radiomobile. Le signal multicapteurs reçu s'exprime à partir du signal s(t) par la relation:

$$X(t) = [x_1(t) , ... , x_k(t)]^T = s(t) * G(t) + B(t),$$

où:

- $G$(t) est le canal multicapteurs reçu, constitué de la forme d'onde globale émission $C_0$(t), du filtre émission, du canal de propagation et du filtre de réception,
- $x_i$(t) est le signal reçu sur le capteur i,
- $B$(t) est le vecteur bruit total composé du bruit de fond et des signaux brouilleurs éventuels (à noter que chacun des signaux reçus par le réseau est signal utile lorsqu'il s'agit de le démoduler ou un signal brouilleur lorsqu'il s'agit de démoduler un autre signal).

$X$(t) peut aussi s'écrire en fonction des symboles transmis suivant la relation :

$$X(t) \;=\; \sum_n s_n\, G(t - nTs) \;+\; B(t). \qquad (4)$$

où Ts est la période-symbole.

L'égalisation monocapteur du signal de sortie du filtre spatial x(t) = $W^+$ $X$(t) s'obtient en utilisant un Filtre Adapté au canal 46 dont l'expression de la fonction de transfert est donnée par une relation de la forme:

$$h(t) = 1/s^2\, g(t), \qquad\qquad (5)$$

où $s^2$ est la puissance du bruit b(t) = $W^+$ $B$(t) en sortie du filtre spatial,
et g(t) = $W^+$ $G$(t) est le canal utile en sortie du filtre spatial.

Le processeur 47 détermine la séquence de symboles transmise. Il est programmé selon l'algorithme de Viterbi dont une description peut être trouvée dans l'article de M.J.G. PROAKIS, ayant pour titre "Adaptive Equalization for TDMA Digital Mobile Radio", IEEE Trans. on Vehicular Techn., vol 40, n°2, Mai 1991. Cet algorithme permet, à partir d'une séquence de symboles ($y_n$) obtenue en sortie du filtre adapté 46, de trouver la séquence ($s^{k0}_n$) d'indice $k_0$ qui minimise la probabilité d'erreur de décision sur la séquence de symboles transmis, ou encore de façon équivalente qui maximise le critère suivant :

$$(6) \begin{cases} k0 = \arg\mathrm{MAX}_k\left\{ j^k(X) = \sum_n j^k_n(X) \right\} \\[2mm] \text{avec}: j^k_n(X) = 2\,\mathrm{Re}\!\left[ s^{k\,*}_n \left( y_n - \sum_{p<n} s^k_p \gamma_{n-p} \right) \right] - \left| s^k_n \right|^2 \gamma_0 \\[2mm] \text{où}: \quad - \gamma_n = g^+(-t) * h(t)_{\,t=nTs} \\[2mm] \qquad\quad - y_n = h^+(-t) * y(t)_{\,t=nTs} \end{cases}$$

L'algorithme de Viterbi travaille à partir du signal de sortie $y_n$ du filtre adapté 46 et des coefficients $\gamma_n$ obtenus en sortie du dispositif de calcul 49.

En considérant:

$H$ le vecteur constitué à partir des échantillons temporels du canal de propagation en sortie du filtre spatial 50 tel que:

$$H = (g(0),\dots , g[(L-1)Te])^T. \tag{8}$$

et en notant: $S(n\ Te) = \{s(n\ Te), \dots , s[(n-L+1)Te]\}^T$ le vecteur formé à l'aide des symboles connus de la séquence d'apprentissage, le signal traité s'écrit:

$$y(n\ Te) = H^H\ S(n\ Te) + b(n\ Te) \tag{9}$$

où Te représente la période d'échantillonnage, multiple de la période symbole Ts.

L'estimation du canal calculée par le dispositif de calcul 48 est obtenue par application de la formule connue de Wiener, suivant la relation :

$$H = R_{SS}^{-1}\ r_{S_\gamma}, \tag{10}$$

où la matrice de corrélation $R_{SS}$ et le vecteur d'intercorrélation $r_{S\gamma}$ sont estimés par l'estimateur classique non biaisé défini par la relation:

$$R_{SS} = \frac{1}{N} \sum_{n=0}^{N} S(nTe)\ S(nTe)^H$$

$$r_{Sy} = \frac{1}{N} \sum_{n=0}^{N} S(nTe)\ y(nTe)^* \tag{11}$$

où l'opérateur "H" représente l'opération de transposition-conjugaison.

L'estimation est réalisée sur les 16 bits placés au centre d'une séquence d'apprentissage TSC (soit sur N=32 échantillons lorsque Te=2Ts) ou sur les 59 derniers bits de la séquence d'apprentissage SCH (N = 2x59 = 118 lorsque Te = 2Ts).

L'estimation du canal de propagation, permet d'obtenir une estimation des échantillons de la puissance de bruit par la formule:

$$S^2 = \frac{1}{N} \sum_{n=0}^{N} \left[y(n\ Te)\right]^2 - rSy^H\ RSS^{-1}\ rSy. \tag{12}$$

Ce calcul est effectué par le dispositif de calcul 48 qui applique ce résultat sur une entrée du dispositif de calcul du rapport signal à bruit 50.

Les coefficients du filtre adapté au canal 54 sont obtenus en application de la formule (5) suivant la relation :

$$h(i\ Te) = 1/s^2\ g(i\ Te) \tag{14}$$

Les coefficients $\gamma_n$ utilisés par l'algorithme de Viterbi sont obtenus par la formule (6), qui s'exprime aussi de la façon suivante :

$$\gamma_n = \sum_{i=0}^{L-1-2n} g^*(iTe)\ h((2n+i)Te) \tag{15}$$

Ces coefficients représentent le modèle d'IIS en sortie du filtre spatio-temporel 42 qui est à traiter par l'égaliseur monodimensionnel.

(Le facteur 2n est dû au fait que les coefficients utilisés par l'algorithme de Viterbi sont calculés au rythme-symbole).

Le rapport signal à bruit en sortie du filtre spatial 42 est égal au coefficient $\gamma_0$. Ce bruit est en première approximation uniquement composé par du bruit de fond, puisque les interférences constituées par les autres émissions sont réjetées. Le coefficient $\gamma_0$ constitue par conséquent une estimation du rapport signal à bruit de fond en sortie du filtre spatial.

En supposant que le réseau de capteurs reçoive deux émissions sur le même canal, en sortie du filtre spatial 42 calculé pour l'émission k (k = 1 ou 2), le rapport signal à bruit de fond peut être estimé par la formule :

$$S/Bk = (pk / s^2)(1 - a^2)$$

où pk est la puissance totale reçue sur les K capteurs du réseau, pour l'émission k,

et $a^2$ est la corrélation spatiale entre les deux émissions (produit scalaire au carré des deux vecteurs directeurs normalisés).

Une comparaison entre les rapports signal à bruit S/B1 et S/S2, par le dispositif de calcul 58 permet de déduire le rapport C/I entre la puissance de l'émission issue de la cellule serveuse et la puissance de l'émission issue de la cellule interférente.

La puissance absolue en dBm de chaque source peut également être estimée: elle est environ égale à la somme du niveau de bruit en dBm présent sur chaque capteur (connue en fonction du gain) et du rapport S/Bk. Cette quantité constitue une approximation du rapport signal à bruit, qu'il faut corriger en tenant compte:

- que l'estimateur plafonne pour les fortes valeurs du rapport S/B,
- que la puissance pk est la puissance totale reçue (et donc qu'elle est K fois supérieure à la puissance moyenne reçue sur chaque capteur),
- du facteur $1 - a^2$.

Les deux premiers phénomènes peuvent être pris en compte par une calibration en injectant un signal de niveau connu en entrée des récepteurs et en comparant le niveau estimé en dBm au niveau effectivement injecté.

**Revendications**

1. Procédé d'analyse des interférences dans un système de radiocommunication cellulaire comportant des fréquences de balise et des fréquences de trafic **caractérisé en ce qu'**il consiste pour rechercher sur une fréquence d'analyse déterminée et à l'intérieur d'une cellule la provenance d'interférences causées par des cellules voisines,

 - à effectuer (8) une synchronisation multivoies sur les séquences d'apprentissage des fréquences de balise pour déterminer le nombre de stations de base utilisant la fréquence d'analyse comme fréquence de balise,
 - à démoduler (10) après filtrage spatial les identifiants des stations de base émettrices des fréquences de balise sur lesquelles une synchronisation a été prise,
 - à effectuer (14) une synchronisation multivoies sur les séquences d'apprentissage des fréquences de trafic pour déterminer le nombre de stations de base utilisant la fréquence d'analyse comme fréquence de trafic.

2. Procédé selon la revendication 1, **caractérisé en ce qu'**il consiste pour déterminer les identifiants des stations de base utilisant la fréquence d'analyse comme fréquence de trafic à rechercher (22,..,36) sur l'ensemble des fréquences du réseau les stations de base qui ont une fréquence de balise synchrone avec la fréquence de trafic, à les démoduler après filtrage spatial pour obtenir leurs identifiants : fréquences de balise et identité de la station de base, et à conserver celle qui comporte la fréquence d'analyse parmi la liste des fréquences de trafic démodulées.

3. Procédé selon l'une quelconque des revendications 1 et 2 **caractérisé en ce qu'**il consiste pour effectuer la synchronisation multivoies sur les séquences d'apprentissage associées aux fréquences de balise ou de trafic en présence ou non de brouilleurs,à estimer la matrice de corrélation $R_{XX}$ de signaux reçus sur un ensemble de N capteurs, à calculer la matrice de corrélation inverse $R^{-1}_{XX}$, à calculer des vecteurs d'intercorrélation $r_{Xd}$ entre les signaux $X_{(k)}$ reçus sur l'ensemble des N capteurs et un signal d'apprentissage d(n) connu, à calculer un critère de synchronisation multiplicateur en effectuant le produit scalaire entre le vecteur d'intercorrélation $\hat{r}_{Xd}$ et un vecteur obtenu par le produit de la matrice de corrélation inverse $R^{-1}_{XX}$ et du vecteur d'intercorrélation transposé conjugué $r^{+}_{Xd}$ et à comparer la valeur du critère obtenu à une valeur de seuil $\eta$ déterminée pour placer la synchronisation sur l'échantillon (P) du signal pour lequel la valeur du critère dépasse la valeur du seuil $\eta$.

4. Procédé selon la revendication 3, **caractérisé en ce que** la séquence d'apprentissage d(n) correspond à la séquence d'apprentissage des signaux SCH et TCH des systèmes de radiocommunication GSM et DCS1800.

5. Procédé selon l'une quelconque des revendications 1 à 4, **caractérisé en ce que**, sur une fréquence de balise la démodulation des messages de signalisation indiquant en particulier les fréquences de trafic associées et l'identité de la station de base est obtenue par filtrage spatial mis en oeuvre en exploitant la séquence d'apprentissage de la fréquence de balise pour modifier le diagramme de réception et séparer les différents signaux reçus en formant des trous de réception dans la direction des signaux brouilleurs produits par d'autes stations de base et des brouilleurs externes au réseau.

6. Procédé selon la revendication 5, **caractérisé en ce qu'**il consiste à mettre en oeuvre une méthode de filtrage spatiale sur réplique, en faisant intervenir le trajet de plus forte puissance déterminé à partir de la synchronisation multivoies pour l'adaptation du filtre spatial.

7. Procédé selon la revendication 5, **caractérisé en ce qu'**il consiste à utiliser une méthode de filtrage spatiale sur réplique filtrée qui permet de faire intervenir l'ensemble des trajets utiles pour l'adaptation du filtre spatial.

8. Procédé selon la revendication 7, **caractérisé en ce qu'**il consiste à effectuer une égalisation monodimensionnelle des signaux obtenus par filtrage spatial.

9. Dispositif d'analyse des interférences dans un système de radiocommunication comportant des fréquences de balise et des fréquences de trafic **caractérisé en ce qu'**il comprend un réseau d'antennes (1) couplé à un récepteur multivoies (2) pour la réception synchrone de signaux reçus par chacune des antennes et un équipement numérique (3) couplé au récepteur multivoie (2) et adapté :

   - à effectuer (8) une synchronisation multivoies sur la séquence d'apprentissage de fréquence de balise pour déterminer le nombre de stations de base utilisant la fréquence d'analyse comme fréquence de balise,
   - à démoduler (10) après filtrage spatial les identifiants des stations de base émettrices des fréquences de balise sur lesquelles une synchronisation a été prise,
   - à effectuer (14) une synchronisation multivoies sur les séquences d'apprentissage des fréquences de trafic pour déterminer le nombre de stations de base utilisant la fréquence d'analyse comme fréquence de trafic.

10. Dispositif selon la revendication 9, **caractérisé en ce que** l'équipement de traitement numérique (3) est adapté à déterminer dans un réseau GSM DCS1800, sur les canaux de type balise, le mot d'identification BSIC des cellules obtenu après démodulation des bursts SCH ainsi que l'identité CI et le code de localisation LAC de chaque cellule obtenus après démodulation des bursts BCCH.

11. Dispositif selon l'une quelconque des revendications 9 à 10, **caractérisé en ce que** les antennes du réseau d'antennes (1) sont espacées entre elles, d'une distance supérieure à 0,5 fois la plus grande longueur d'onde des fréquences utilisées dans le système de radiocommunication.

12. Dispositif selon l'une quelconque des revendications 9 à 11, **caractérisé en ce que** le récepteur multivoies (2) comprend un dispositif d'extraction de messages et de décodage (43) couplé à un dispositif de filtrage spatial (42) par l'intermédiaire d'un dispositif d'égalisation (44) monodimensionnel comportant un processeur programmé suivant l'algorithme de Viterbi.

**Patentansprüche**

1. Verfahren zur Analyse der Interferenzen in einem zellularen Funkverkehrssystem, das Bakenfrequenzen und Verkehrsfrequenzen enthält, **dadurch gekennzeichnet, dass** es bei der Suche auf einer bestimmten Analysefrequenz und innerhalb einer Zelle nach dem Ursprung von Interferenzen, die von benachbarten Zellen verursacht werden, darin besteht

- eine Mehrkanalsynchronisation auf die Lernsequenzen der Bakenfrequenzen durchzuführen (8), um die Anzahl von Basisstationen zu bestimmen, die die Analysefrequenz als Bakenfrequenz nutzen,
- nach räumlicher Filterung die Kennungen der Bakenfrequenzen sendenden Basisstationen zu demodulieren (10), an denen eine Synchronisation vorgenommen wurde,
- eine Mehrkanalsynchronisation auf die Lernsequenzen der Verkehrsfrequenzen durchzuführen (14), um die Anzahl von Basisstationen zu bestimmen, die die Analysefrequenz als Verkehrsfrequenz nutzen.

2. Verfahren nach Anspruch 1, **dadurch gekennzeichnet, dass** es zur Bestimmung der Kennungen der Basisstationen, die die Analysefrequenz als Verkehrsfrequenz nutzen, darin besteht, in allen Frequenzen des Netzes die Basisstationen zu suchen (22,..,36), von denen eine Bakenfrequenz mit der Verkehrsfrequenz synchron ist, sie nach räumlicher Filterung zu demodulieren, um ihre Kennungen zu erhalten, nämlich Bakenfrequenz und Identität der Basisstation, und diejenige beizubehalten, die die Analysefrequenz in der Liste der demodulierten Verkehrsfrequenzen enthält.

3. Verfahren nach einem der Ansprüche 1 und 2, **dadurch gekennzeichnet, dass** es zur Durchführung der Mehrkanalsynchronisation auf die den Baken- oder Verkehrsfrequenzen zugeordneten Lernfrequenzen mit oder ohne Vorhandensein von Störsignalen darin besteht, die Korrelationsmatrix $R_{XX}$ von in einer Einheit von N Sensoren empfangenen Signalen zu schätzen, die inverse Korrelationsmatrix $R^{-1}{}_{XX}$ zu berechnen, Interkorrelationsvektoren $r_{Xd}$ zwischen den in der Gesamtheit der N Sensoren empfangenen Signalen X(k) und einem bekannten Lernsignal d(n) zu berechnen, ein Synchronisations-Multiplikationskriterium zu berechnen, indem das Skalarprodukt zwischen dem Interkorrelationsvektor $r_{Xd}$ und einem Vektor gebildet wird, der durch das Produkt der inversen Korrelationsmatrix $R^{-1}{}_{XX}$ und des transponierten konjugierten Interkorrelationsvektor $r^+{}_{Xd}$ erhalten wird, und den Wert des erhaltenen Kriteriums mit einem bestimmten Schwellenwert η zu vergleichen, um die Synchronisation auf die Tastprobe (P) des Signals zu bringen, für das der Wert des Kriteriums den Schwellenwert η übersteigt.

4. Verfahren nach Anspruch 3, **dadurch gekennzeichnet, dass** die Lernsequenz d(n) der Lernsequenz der Signale SCH und TCH der Funkverkehrssysteme GSM und DCS1800 entspricht.

5. Verfahren nach einem der Ansprüche 1 bis 4, **dadurch gekennzeichnet, dass** auf einer Bakenfrequenz die Demodulation der Signalisationsnachrichten, die insbesondere die zugehörigen Verkehrsfrequenzen und die Identität der Basisstation angeben, durch räumliches Filtern erhalten wird, indem die Lernsequenz der Bakenfrequenz ausgewertet wird, um das Empfangsdiagramm zu verändern und die verschiedenen empfangenen Signale zu trennen, wobei Empfangslöcher in Richtung der Störsignale gebildet werden, die von anderen Basisstationen und Störsendern außerhalb des Netzes erzeugt werden.

6. Verfahren nach Anspruch 5, **dadurch gekennzeichnet, dass** es darin besteht, ein Verfahren der räumlichen Filterung auf Replik einzusetzen, indem der Weg mit dem stärksten Leistungspegel verwendet wird, der ausgehend von der Mehrkanalsynchronisation für die Anpassung des räumlichen Filters bestimmt wird.

7. Verfahren nach Anspruch 5, **dadurch gekennzeichnet, dass** es darin besteht, ein Verfahren der räumlichen Filterung auf gefilterter Replik zu verwenden, das es ermöglicht, die Gesamtheit der Nutzwege zur Anpassung des räumlichen Filters einzusetzen.

8. Verfahren nach Anspruch 7, **dadurch gekennzeichnet, dass** es darin besteht, eine eindimensionale Egalisierung der durch räumliche Filterung erhaltenen Signale durchzuführen.

9. Vorrichtung zur Analyse der Interferenzen in einem zellularen Funkverkehrssystem, das Bakenfrequenzen und Verkehrsfrequenzen enthält, **dadurch gekennzeichnet, dass** sie ein Antennennetz (1), das mit einem Mehrkanalempfänger (2) für den synchronen Empfang von Signalen gekoppelt ist, die von jeder der Antennen empfangen werden, und eine digitale Einrichtung (3) aufweist, die mit dem Mehrkanalempfänger (2) gekoppelt ist, und in der Lage ist:

- eine Mehrkanalsynchronisation auf die Bakenfrequenz-Lernsequenz durchzuführen (8), um die Anzahl von Basisstationen zu bestimmen, die die Analysefrequenz als Bakenfrequenz verwenden,
- nach räumlicher Filterung die Kennungen der Basisstationen zu demodulieren (10), die Bakenfrequenzen senden, auf die eine Synchronisation vorgenommen wurde,
- eine Mehrkanalsynchronisation auf die Lernsequenzen der Verkehrsfrequenzen durchzuführen (14), um die Anzahl von Basisstationen zu bestimmen, die die Analysefrequenz als Verkehrsfrequenz verwenden.

**10.** Vorrichtung nach Anspruch 9, **dadurch gekennzeichnet, dass** die Einrichtung zur digitalen Verarbeitung (3) in der Lage ist, in einem GSM DCS1800-Netz in den Kanälen vom Typ Bake das Identifikationswort BSIC der Zellen zu bestimmen, das nach der Demodulation der Bursts SCH erhalten wurde, sowie die Identität CI und den Lokalisationscode LAC jeder Zelle zu bestimmen, die nach der Demodulation der Bursts BCCH erhalten wurden.

**11.** Vorrichtung nach einem der Ansprüche 9 und 10, **dadurch gekennzeichnet, dass** die Antennen des Antennennetzes (1) einen Abstand zueinander aufweisen, der größer ist als 0,5 mal die größte Wellenlänge der im Funkverkehrssystem verwendeten Frequenzen.

**12.** Vorrichtung nach einem der Ansprüche 9 bis 11, **dadurch gekennzeichnet, dass** der Mehrkanalempfänger (2) eine Vorrichtung zur Entnahme von Nachrichten und zur Decodierung (43) aufweist, die mit einer Vorrichtung zur räumlichen Filterung (42) über eine eindimensionale Egalisierungsvorrichtung (44) gekoppelt ist, die einen gemäß dem Viterbi-Algorithmus programmierten Prozessor aufweist.

**Claims**

**1.** Process for analysing interference in a cellular radiocommunication system comprising beacon frequencies and traffic frequencies, **characterized in that**, in order to search on a specified analysis frequency and inside a cell for the origin of interference caused by neighbouring cells, it consists:

- in performing (8) a multipath synchronization on the learning sequences of the beacon frequencies so as to determine the number of base stations using the analysis frequency as beacon frequency,
- in demodulating (10) after spatial filtering the identifiers of the base stations transmitting the beacon frequencies on which a synchronization has been made,
- in performing (14) a multipath synchronization on the learning sequences of the traffic frequencies so as to determine the number of base stations using the analysis frequency as traffic frequency.

**2.** Process according to Claim 1, **characterized in that**, in order to determine the identifiers of the base stations using the analysis frequency as traffic frequency, it consists in searching (22,...,36) over the set of frequencies of the network for the base stations which have a beacon frequency synchronous with the traffic frequency, in demodulating them after spatial filtering so as to obtain their identifiers:

beacon frequencies and identity of the base station, and in preserving that which comprises the analysis frequency from among the list of demodulated traffic frequencies.

**3.** Process according to any one of Claims 1 and 2, **characterized in that**, in order to perform the multipath synchronization on the learning sequences associated with the beacon or traffic frequencies in the presence or otherwise of jammers, it consists in estimating the correlation matrix $R_{XX}$ of signals received on a set of N sensors, in calculating the inverse correlation matrix $R^{-1}_{XX}$ in calculating cross-correlation vectors $r_{Xd}$ between the signals $X_{(k)}$ received on the set of N sensors and a known learning signal $d(n)$, in calculating a multiplier synchronization criterion by taking the scalar product of the cross-correlation vector $r_{Xd}$ and a vector obtained from the product of the inverse correlation matrix $R^{-1}_{XX}$ and the transposed conjugate cross-correlation vector $r^{+}_{Xd}$ and in comparing the value of the criterion obtained with a threshold value $\eta$ determined so as to place the synchronization on the sample (P) of the signal for which the value of the criterion exceeds the value of the threshold $\eta$.

**4.** Process according to Claim 3, **characterized in that** the learning sequence $d(n)$ corresponds to the learning sequence of the SCH and TCH signals of the GSM and DCS1800 radiocommunication systems.

**5.** Process according to any one of Claims 1 to 4, **characterized in that**, on a beacon frequency the demodulation of the signalling messages indicating in particular the associated traffic frequencies and the identity of the base station is obtained by spatial filtering implemented by utilizing the learning sequence of the beacon frequency to modify the reception diagram and separate the various signals received by forming reception holes in the direction of the jamming signals produced by other base stations and jammers external to the network.

**6.** Process according to Claim 5, **characterized in that** it consists in implementing a spatial method of filtering by replica, by involving the path of highest power, determined from the multipath synchronization, for the matching of the spatial filter.

7. Process according to Claim 5, **characterized in that** it consists in using a spatial method of filtering by filtered replica which makes it possible to involve the set of useful paths for the matching of the spatial filter.

8. Process according to Claim 7, **characterized in that** it consists in performing a one-dimensional equalization of the signals obtained by spatial filtering.

9. Device for analysing interference in a radiocommunication system comprising beacon frequencies and traffic frequencies, **characterized in that** it comprises a network of antennas (1) coupled to a multipath receiver (2) for the synchronous reception of signals received by each of the antennas and a digital rig (3) coupled to the multipath receiver (2) and suitable:

   - for performing (8) a multipath synchronization on the beacon frequency learning sequence so as to determine the number of base stations using the analysis frequency as beacon frequency,
   - for demodulating (10) after spatial filtering the identifiers of the base stations transmitting the beacon frequencies on which a synchronization has been made,
   - for performing (14) a multipath synchronization on the learning sequences of the traffic frequencies so as to determine the number of base stations using the analysis frequency as traffic frequency.

10. Device according to Claim 9, **characterized in that** the digital processing rig (3) is adapted to determine, in a GSM DCS1800 network, on the beacon-type channels, the identification word BSIC of the cells, which is obtained after demodulating the SCH bursts, as well as the identity CI and the locating code LAC of each cell, which are obtained after demodulating the BCCH bursts.

11. Device according to any one of Claims 9 to 10, **characterized in that** the antennas of the network of antennas (1) are spaced apart by a distance greater than 0.5 times the largest wavelength of the frequencies used in the radiocommunication system.

12. Device according to any one of Claims 9 to 11, **characterized in that** the multipath receiver (2) comprises a message extraction and decoding device (43) coupled to a spatial filtering device (42) by way of a one-dimensional equalization device (44) comprising a processor programmed according to the Viterbi algorithm.

FIG.1

FIG.2

FIG.3

ANTENNES

RÉCEPTEUR MULTI-VOIES SYNCHRONE

COMMANDE DE GAIN

COMMANDE DE FRÉQUENCE

ÉQUIPEMENT DE TRAITEMENT NUMÉRIQUE

UNITÉ DE STOCKAGE

INTERFACE UTILISATEUR

FIG.4

EP 0 931 429 B1

FIG.5

FIG.6

FIG. 7

lu → sélection canal ~6

enregistrement séquence de signal ~7

synchronisation multi-voies sur burst SCH ~8

détection de bursts SCH? ~9

pour chaque SCH détecté

démodulation multi-voies des bursts SCH et estimation niveau — 10 → BSIC ┐ → BSIC niveau

démodulation multi-voies des bursts BCCH ~11

message de type 3 ? ~12

décodage message ~13 → CI LAI

synchronisation multi-voies sur burst TCH ~14

détection de bursts TCH ? ~15

pour chaque TCH détecté

marquage temporel → TSC niveau ~16

calage 2ème récepteur sur autre fréquence ~17

synchronisation multi-voies sur burst SCH ~18

détection de bursts SCH synchrone des bursts TCH ? ~19

démodulation multi-voies ~20

fréq. trafic identiques ? → BSIC niveau ~21

EP 0 931 429 B1

| T | BITS NON MODULÉS |
|---|---|

148
BURST FCH

| T | DONNÉES | SÉQUENCE APPRENTISSAGE | DONNÉES | T |
|---|---|---|---|---|
| 3 | 39 | 64 | 39 | 3 |

BURST SCH

| T | DONNÉES | SÉQUENCE APPRENTISSAGE | DONNÉES | T |
|---|---|---|---|---|
| 3 | 58 | 26 | 58 | 3 |

BURST DE TRAFIC
(TCH,BCCH,PAGCH, ...)

Rs = 270.8 KBAUDS
156.25 SYMBOLES
577 MICROSECONDES

## FIG.8

## FIG.9

FIG.10

FIG.11

PIC PRINCIPAL

PIC SECONDAIRE
IMPORTANT

PICS SECONDAIRES
NÉGLIGEABLES

POSITION RELATIVE
PRÉDICTIBLE

**FIG.12**

PICS PRINCIPAUX

FAUSSE ALARME
(PIC SECONDAIRE)

SEUIL DE
DÉTECTION

POSITION RELATIVE
PRÉDICTIBLE

**FIG.13**

synchro
multi-voies
TCH — 22

couples
(position.TSC.SNIR)

tri sur clé :
SNIR décroissant — 23

couples
(position. TSC.SNIR)

N=1 — 24

TSC_cour = TSC (N)
SNIR_cour= SNIR (N) — 25
pos_cour = position (N)

TSC_cour

K=N — 26

K=K+1 — 27

table
ambiguités — 28

TSC (K)

écart_ambi(TSC_cour.TSC(K))

pos_cour
position (K)

test
(position (K) - pos_cour) = — 29
écart_ambi(TSC_cour.TSC(K))?

non

oui

test facultatif
SNIR_cour ≠ SNIR_ambi(TSC_cour.TSC(K))? — 30

non

SNIR_ambi(TSC_cour.TSC(K))

oui

éliminer élément K de la liste — 31

test
K fin de
la liste? — 32

non

oui

N=N+1 — 33

test
N fin de
la liste? — 34

non

oui

FIG.14

FIG.15

(PLACE DE L'ÉTOILE)   FIG.16

FIG.17

LE FILTRAGE SPATIAL ADAPTE EN PERMANENCE
LE DIAGRAMME DE RÉCEPTION
(ICI DÉMODULATION DU BSIC DE LA STATION N°3)

LE MOBILE EFFECTUE UNE IDENTIFICATION DES BSIC
DE TOUTES LES STATIONS REÇUES

FIG.18

CONTEXTE DE
BROUILLAGE

0
<9dB
11
12

ANTI-BROUILLAGE
DE C

ANTI-BROUILLAGE
DE 12

0
>9dB
11
12

DÉMODULATION
POSSIBLE

12
>9dB
0
11

DÉMODULATION
POSSIBLE
IDENTIFICATION BSIC
DE L'INTERFÉRENCE

## FIG.19

Teb

1,0E- 01

1,0E- 02

1,0E- 03

0    2    4    6    8    10    12    14

Eb/No          (PLACE DE L'ÉTOILE)

## FIG.20

28

FIG.21

FIG.22

N. antennes

DIVISEUR MULTI-VOIES — 39

2.N sorties

RÉCEPTEUR MULTI-VOIES SYNCHRONE — 2

RÉCEPTEUR MULTI-VOIES SYNCHRONE — 2

COMMANDE DE GAIN

COMMANDE DE FRÉQUENCE

ÉQUIPEMENT DE TRAITEMENT NUMÉRIQUE — 40

UNITÉ DE STOCKAGE — 5

INTERFACE UTILISATEUR — 41

## FIG.23